# EUROPÄISCHE PATENTANMELDUNG

(11) **EP 1 213 931 A2**
(43) Veröffentlichungstag der Anmeldung: **12.06.2002**
(21) Anmeldenummer: 01000650.0
(22) Anmeldetag: 22.11.2001
(51) Int. Cl.: H04Q 7/22

(54) **Verfahren zum Versenden und Empfangen von Kurznachrichten in einem Mobilfunknetz**

(30) Priorität: 05.12.2000 DE 10060365; 01.10.2001 DE 10148466
(71) Anmelder: SIEMENS AKTIENGESELLSCHAFT, 80333 München (DE)
(72) Erfinder: Berg, Andreas, 10585, Berlin (DE); Heine, Ronald, 15370, Fredersdorf (DE)

(57) **Zusammenfassung**

Bei dem erfindungsgemäßen Verfahren wird der ankommende / abgehende CAP (CAMEL application part) Dialog an der Mobilvermittlungsstelle (Mobile Services Switching Center, MSC) unterdrückt (entweder weil die MSC keinen Service Switching Point, SSP, besitzt, oder weil dem Teilnehmer keine SMS-CSI zugewiesen wird), sondern die Kurznachricht wird am SMSC INmäßig bearbeitet: Das MSC entnimmt im MO-Fall (Senden) der SMS die Adresse des Anrufenden (Calling Party Address, CgPA), im MT-Fall (Empfangen) die Adresse des Angerufenen (Called Party Address CdPA), und sendet sie mit einer MO/MT Indikation über einen USSD String (Unstructured Supplementary Service Data) zum HLR des Endgerätes.

## Beschreibung

### Fachgebiet der Erfindung

Die Kommunikation über Mobilfunknetze erfreut sich in den letzten Jahren einer immer größeren Beliebtheit.
Besondere Verbreitung hat zum einen trotz der umständlichen Bedienung, die asynchrone Kommunikation über sogenannte Kurznachrichten (Short Messages) gefunden.
Zum Anderen ist bei bestimmten Zielgruppen, beispielsweise bei Jugendlichen oder bei Teilnehmern, die selber nicht viel telefonieren aber jederzeit erreichbar sein wollen, die Verwendung von vorausbezahlten (sogenannten Prepaid) Telefonkarten in Mobilfunkgeräten sehr populär geworden. Allerdings ist eine Kombination der beiden beliebten Features nicht ohne Weiteres möglich, die Durchführung der Abrechnung bei Kurznachrichten ist verzögert, so daß in der Vergangenheit bei so manchem Prepaid-Kunden (oder dem betroffenen Betreiber) die böse Überraschungen hinterher kam.

Eine Möglichkeit, besondere Dienste in Mobilfunknetzen zu realisieren, ist durch die Architektur der Intelligenten Netze gegeben (in den Standards ITU Q.1200 ff. festgelegt). In einer speziellen Ausgestaltungsform für GSM-Mobilfunknetze gibt es den sogenannten CAMEL (Customized applications for mobile network enhanced logic) Standard, der in der GSM-Norm 02.78 näher erläutert ist.

Die Hersteller von Intelligenten Netzen (IN, Intelligent Networks) werden von den Netzbetreibern mit der Frage konfrontiert, wie IN den Kurznachrichtendienst (Short Message Service, SMS) unterstützt, besonders im Rahmen einer Guthabenvergebührung (Prepaid Service, PPS): In den meisten Netzen ist der Kurznachrichtendienst transparent, d. h. das Vermittlungssystem (Switching Subsystem SSS) hat keinen Triggermechanismus, der IN von dem Versenden (Mobile Originating, MO) oder Empfangen (Mobile Terminating, MT) einer Kurznachricht in Kenntnis setzen kann.

Zwar sind proprietäre Lösungen auf dem Markt (z. B. wird ab Vermittlungsstellen der Release SR8 von Siemens die CAMEL Subscription Information für MOCs O-CSI für einen SMS Trigger benutzt), diese funktionieren jedoch nur in voll integrierten Siemens Netzen einwandfrei: Wird in einem Overlay Netz im Bereich einer Vermittlungsstelle (Mobile Switching Station, MSC) eines anderen Herstellers eine Kurznachricht aufgesetzt, kommt es darauf an ob der Fremdhersteller einen SMS Trigger anbietet oder nicht.

Kurznachrichten-Dienstezentren (Short Message Service Center, SMSC) sind zentrale Punkte im Netz für Kurznachrichten. Eine für den Netzbetreiber akzeptable Lösung sollte hier ansetzen für ein geschlossenes Konzept zu SMS MO/MT.

### Stand der Technik

Für die nähere Zukunft ist nur eine Teillösung bekannt - sie wird allerdings erst in CAMEL Phase 3 unterstützt: Sie enthält einen SMS MO Trigger in den Mobil-Vermittlungsstellen (Mobile Service Switching Point, M-SSPs). Dazu wird am Heimatregister (Home Location Register, HLR) eine SMS-CSI verwaltet, die die üblichen CSI Daten (Camel Subscription Information) wie Adresse des Dienstezentrums (SCP, Service Control Point), Diensteschlüssel (Service Key) usw. einschließt. Schön, aber leider zu spät und unvollständig: Ein SMS MT Trigger (Mobile Termination, Empfang) ist frühestens in CAMEL Phase 4 eingeschlossen.

Bisherige Lösungen sind proprietär (s. o., SR8 SMS MO Trigger via O-CSI), oder ein sogenanntes 'Warm Billing': Abrechnungssysteme des Netzbetreibers sammeln SMS Gebührentickets eine Endnutzers und senden sie 'en block' über Massendatenschnittstellen zum 'richtigen' SCP, wo ein 'negative recharge' durchgeführt wird. Die negativen Auswirkungen dieses Verfahrens sind bekannt, da die Kosten für Kurznachrichten große Beträge erreichte und Endnutzer am SCP virtuell tief in die roten Zahlen rutschten. In solchen Fällen wird die Kontrolle eines Prepaid Systems ad absurdum geführt.

Aus der nachveröffentlichten Patentanmeldung DE 10059647 ist bereits ein Verfahren zum Versenden von Kurznachrichten bekannt.

Aufgabe der Erfindung ist es, eine Lösung für Vergebührung des Kurznachrichten-Dienstes, insbesondere bei Prepaid-Vergebührung, anzubieten, die oben angeführten Nachteile vermeidet.

### Darstellung der Erfindung

Diese Aufgabe wird gelöst durch ein Verfahren gemäß Patentanspruch 1 und eine Vorrichtung gemäß Anspruch 6. Bei dem erfindungsgemäßen Verfahren wird der MO/MT CAP Dialog an der SMSC unterdrückt (entweder weil die SMSC keinen SSP besitzt, oder weil dem Teilnehmer keine SMS-CSI zugewiesen wird), sondern die SMS wird an der SMSC IN-mäßig bearbeitet: Das SMSC entnimmt im Senden-Fall (MO) der SMS die Senderadresse CgPA, im Empfangen-Fall (MT) die Empfängeradresse CdPA, und sendet sie mit einer MO/MT Indikation über einen USSD String zum Heimartregister HLR der Mobile Station. (vgl. GSM 02.90, GSM 02.30)

### Vorteile:

- Die neue Lösung siedelt das IN Handling nicht über das Netz verstreut an allen M-SSPs oder GSNs an, sondern zentral an den Kurznachrichten-Dienstezentren (Short Message Service Centern SMSC).
- Das SMSC agiert so, dass Anpassungen an den anderen Netzelementen minimiert sind oder gar nicht anfallen.
- Statt 'Warm Billing' können Gebühren für Short Messages unmittelbar abgerechnet werden.
- Es liegt hier eine einheitliche Lösung für MO Short Messages und für MT Short Messages vor.
- Die Umsetzung und Implementierung von CAMEL Phase 3 und 4 kommt für die meisten Netzbetreiber Jahre zu spät. Sie brauchen jetzt eine netzverträgliche, schnelle Lösung.
- Das SMSC setzt einen MO/MT spezifischen USSD String auf, der mittels U(G)-CSI vom HLR zum 'richtigen' Dienstezentrum SCP weitergeleitet wird. Der String enthält die MSISDN der CallingParty.
- Wenige SMSCs übernehmen die Rolle der zahlreichen M-SSPs oder GSNs.
- Die vorhandenen Datenbanken im Netz, die Heimatregister (HLRs) werden genutzt anstatt wieder neue Datenbanken zu implementieren.

Vorteilhafte Ausgestaltungen und Weiterbildungen sind in den Unteransprüchen angegeben.

### Kurzbeschreibung der Zeichungen

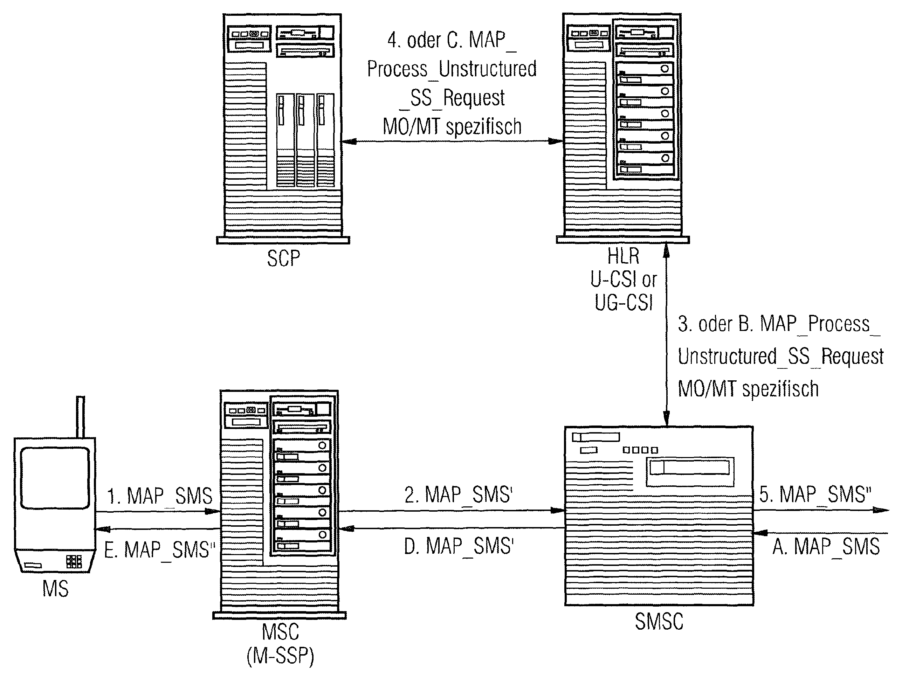

Im folgenden wird die Erfindung anhand von Ausführungsbeispielen erläutert. Dabei zeigt
die Figur das Versenden (Mobile Originating, MO) und das Empfangen einer Kurznachricht (Mobile Terminating, MT).

### Beschreibung der bevorzugten Ausgestaltungsformen

MO '*123 *491729876543#' (MO Indikator: '*' als Trennzeichen)
MT '*123 # 491729876543#' (MT Indikator: '#' als Trennzeichen)

In der Figur ist der erfindungsgemäße Ablauf dargestellt, sowohl der Sende-Fall (MO, Schritte 1 bis 5) als auch der Empfangen-Fall (MT, Schritte A bis E).
Die betroffene Kurznachricht gelangt zuerst zum Kurznachrichten-Dienstezentrum (SMSC, MO-Fall: Schritte 1,2, MT-Fall: Schritt A). Vom Kurznachrichten-Dienstezentrum wird eine Meldung (USSD) an das Heimatregister gesendet (Schritt 3 oder B).
Am Heimatregister (HLR) trifft der USSD String entweder auf eine U(G)-CSI oder nicht (U-CSI: subscribed USSD String, UG-CSI: dialled CSI String). Im ersten Fall leitet das Heimatregister (HLR) den USSD String an die 'richtige' Dienstezentrale SCP weiter (Schritt 4 oder C). (Auf dem SCP kann der Subscriber womöglich bereits seinen Prepaid Dienst via UCB ansprechen. Der USSD Diensteschlüssel (Service Code), im Beispiel '123', muss sich von anderen Diensteschlüssel unterscheiden.)
Die Dienstezentrale (SCP) kann nun die IN Behandlung anhand des Diensteschlüssels identifizieren und ausführen. In den meisten Fällen den Prepaid Service: Nach Prüfung der Bonität und Subtraktion des Preises für die Kurznachricht SMS sendet die Dienstezentrale (SCP) einen Antwort-USSD-String zurück, der von der Kurznachrichten-Zentrale SMSC als "Continue" oder "Release" verstanden wird.

### Beispiel:

MO '*123 *CON491729876543#'
MT '*123 # REL491729876543#'

Im zweiten Fall (der Teilnehmer hat keine U- oder UG-CSI) erkennt das Heimatregister HLR den Diensteschlüssel nicht und antwortet mit einer Fehlermeldung (Provider Error 'not supported service' oder User Error 'Unexpected data value'). Dies ist für das SMSC der Hinweis die übliche (nicht IN) Prozedur zu nutzen.

Der von dem Kurznachrichten-Dienstezentrum SMSC gesendete USSD String sollte aus Sicherheitsgründen Zeichen enthalten, die persönliche Sender nur schwer oder bestenfalls überhaupt nicht schreiben können: Um einem anderen Mobilfunkteilnehmer zu schaden, könnte andernfalls ein Nutzer der Sicherheitslücke uneingeschränkt USSD Strings aufsetzen, die das Prepaid Konto des ersten Mobilfunkteilnehmers reduziert, ohne dass dieser den Kurznachrichten-Dienst in Anspruch genommen hätte.

Derzeit ist kein Mobiltelefon bekannt, das bei Schreiben eines USSD Strings das Umschalten in den Buchstabenmodus erlaubt.
Der in einem Mobiltelefon nutzbare Zeichensatz ist in GSM 03.38 beschrieben. Alle Zeichen des dort beschriebenen GSM 7bit Default Alphabets werden in einem handelsüblichen Handy wie dem Siemens S25 für SMS verwendet mit Ausnahme des GSM 7bit Default Alphabet Extension Tables, nämlich: ^, {, }, \, [, ~, ], |. Da nicht auszuschließen ist, dass auch diese Zeichen irgendwann verfügbar sind, scheiden diese auch aus.

Ein mögliche Lösung ist, das Umschaltzeichen zum Extension Table (Codierung: b1=1, b2=1, b3=0, b4=1, b5=1, b6=0, b7=0) in besonderer Form zu benutzen, die von einem Mobiltelefon nicht kommen kann, z. B. ohne Folgezeichen, oder unmittelbar vor dem abschließenden '#', oder zweimal hintereinander. An dieser Besonderheit könnte der SCP erkennen, dass es sich nicht um einen Betrugsversuch (Fraud/Fake) handelt.

Ein Kurznachrichten-Dienstezentrum SMSC sollte die beschriebene MT Prozedur nicht anstoßen, wenn die Kurznachricht SMS von einem persönlichen Sender kommt: SMS ist in diesem Fall für den Empfänger derzeit in Deutschland kostenlos. Nur Kurznachrichten von Inhalts-Anbietern (sogenannten Content Providern wie z. B. Dr. Materna) sollen vergebührt werden und müssen daher für das Kurznachrichten-Dienstezentrum SMSC als solche erkennbar sein.

### Abkürzungsverzeichnis

- CAMEL: Customized applications for mobile network enhanced logic
- CAP: CAMEL Application Part
- CSI: CAMEL Subscription Information
- GPRS: General packet radio system
- GSN: group switching network
- HLR: Home Location Register
- HPLMN: Home public land mobile network
- IDP: Initial Detection Point
- IN: Intelligentes Netz
- INAP: Intelligent Network Application Part
- MAP: Mobile Application Part
- MO: Mobile Originating
- MS: Mobile Station
- MSC: Mobile Switching Center
- MSISDN: Mobile Subscriber ISD Number
- MT: Mobile Terminating
- PPS: PrePaid Service
- SCP: Service Control Point
- SMS: Short Message Service
- SMSC: Short Message Service Center
- SSP: Service Switching Point
- SSS: Switching SubSystem
- USSD: Unstructured Supplementary Service Data

### Literaturverzeichnis

- GSM 02.30 -: Man-Machine Interface (MMI) of Mobile Station (MS)
- GSM 02.78 -: Customised Applications for Mobile network Enhanced Logic (CAMEL), Service Definition - Stage 1
- GSM 02.90 -: Unstructured Supplementary Service Data (USSD) - Stage 1
- GSM 03.38 -: Alphabets and language-specific information
- GSM 03.78 -: Customized Applications for Mobile Network Enhanced Logic (CAMEL); Stage 2
- GSM 09.02 -: Mobile Application Part (MAP) specification
- GSM 09.78 -: CAMEL Application Part (CAP) specification - Phase 2

## Patentansprüche

1. Verfahren zum Versenden und Verfahren zum Empfangen von Kurznachrichten von einem mobilen Endgerät jeweils in einem Mobilfunknetz, bestehend aus folgenden Schritten:
(a) eine Kurznachricht(MAP_SMS, MAP_SMS') wird von einem Kurznachrichten-Dienste-Zentrum (SMSC) empfangen (A, 2),
(b) das Kurznachrichten-Dienste-Zentrum entnimmt der Kurznachricht die Mobil-Adresse (CgPA bzw. CdPA),
(c) erzeugt eine Meldung (USSD), die diese Mobil-Adresse und eine Dienstekennung enthält,
(d) und sendet diese Meldung an das Heimatregister (HLR, 3 und 4 oder B und C),
(e) und empfängt von dem Heimatregister als Antwort eine Meldung, aufgrund derer die Übermittlung der Kurznachricht fortgesetzt oder abgebrochen wird.

2. Verfahren zum Versenden und Verfahren zum Empfangen von Kurznachrichten von einem mobilen Endgerät jeweils in einem Mobilfunknetz, bestehend aus folgenden Schritten:
(a) das Heimatregister (HLR) erhält eine Meldung (USSD) von dem Kurznachrichten-Dienstezentrum (SMSC), die zumindest eine Dienstekennung und eine Mobil-Adresse (CgPA bzw. CdPA) aus der zu versendenden Kurznachricht enthält, und
(b) diese Meldung an das richtige Dienstezentrum (SCP) weiterleitet, und
(c) von dem Dienstezentrum (SCP) eine Antwort erhält, und
(d) diese an das Kurznachrichten-Dienstezentrum (SMSC) zurück sendet.

3. Verfahren zum Versenden und Verfahren zum Empfangen von Kurznachrichten von einem mobilen Endgerät jeweils in einem Mobilfunknetz, bestehend aus folgenden Schritten:
(a) das Dienstezentrum (SCP) eine eine Meldung (USSD) von dem Kurznachrichten-Dienstezentrum (SMSC, 4 oder C) über das Heimatregister (HLR, 3 oder B), die zumindest eine Dienstekennung und eine Mobil-Adresse (CgPA bzw. CdPA) der zu versendenden Kurznachricht enthält, und
(b) das Dienstezentrum (SCP) eine Behandlung der Meldung vornehmen kann, insbesondere Prüfen der Bonität des Absenders und Erzeugen eines Gebührentickets für die versendete Kurznachricht,
(c) nach erfolgreicher Behandlung eine Meldung über das Heimatregister (HLR) an das Kurznachrichten-Dienstezentrum (SMSC) zurück sendet, die eine Anweisung enthält über die weitere Behandlung der zu versendenden Kurznachricht.

4. Verfahren nach einem der vorhergehenden Patentansprüche 1 bis 3,
**dadurch gekennzeichnet, dass**
die Meldung (USSD) Zeichen enthält, die im nutzbaren Zeichensatz nicht enthalten sind.

5. Verfahren nach einem der vorhergehenden Patentansprüche,
**dadurch gekennzeichnet, dass**
in dem Fall, dass eine Kurznachricht an ein mobiles Endgerät gesendet werden soll, abhängig von dem Absender verschieden behandelt wird, insbesondere die Gebührenberechnung.

6. Vorrichtung zur Durchführung des Verfahrens nach einem der vorhergehenden Patentansprüche 1 bis 5.
